# EUROPEAN PATENT SPECIFICATION

(11) **EP 0 465 187 B1**
(45) Date of publication and mention of the grant of the patent: **08.02.1995**
(21) Application number: 91305932.5
(22) Date of filing: 01.07.1991
(51) Int. Cl.: B60C 9/02

(54) **Pneumatic tyre**
Luftreifen
Bandage pneumatique

(30) Priority: 06.07.1990 JP 180180/90
(43) Date of publication of application: 08.01.1992
(73) Proprietor: SUMITOMO RUBBER INDUSTRIES LIMITED, Kobe-shi Hyogo-ken (JP)
(72) Inventor: Iseki, Tsutomu, Nishi Shirakawa-gun, Fukushima-ken (JP)
(74) Representative: Stewart, Charles Geoffrey

(56) References cited:
- FR-A- 394 987
- FR-A- 489 657
- FR-A- 1 444 983
- FR-A- 1 542 626
- FR-A- 2 204 511
- FR-A- 2 351 778

## Description

The present invention relates to a pneumatic tyre which is enhanced in ride comfort and steering stability by improving the uniformity in the circumferential direction of the tyre and enhancing the dynamic balance.

Conventionally, as shown in Fig.6, a carcass (a) of the pneumatic tyre such as a tyre for a passenger car is formed by rolling up a sheet of a carcass ply material into a cylindrical shape. Therefore, the carcass (a) has an overlapping portion (b) to connect the ply edges to each other. The overlapping portion (b) is usually set to be narrow in the tyre circumferential direction, that is, the length is set to be not more than 10mm.

However, in such a construction a variation in carcass rigidity occurs at the overlapping portion (b), and the dynamic balance of the tyre is deteriorated. As a result, vibration of the tyre while running is generated which deteriorate the ride comfort. Also, the overlapping portion causes an uneveness at the tread surface usually in the form of a change of level or tread radius.

If the carcass is composed of two or three plies, such difference in rigidity of the carcass plies can be mitigated to some degree by separating the overlapping portions of the different plies in the tyre circumferential direction. However complete dynamic balance or significant spreading of rigidity variations can not be achieved so that vibration results and good ride comfort is not achieved.

It is hence the object of the invention to provide a pneumatic tyre capable of enhancing ride comfort, and steering stability.

According to the present invention, this object is achieved by means of a pneumatic tyre comprising the features of claim 1.

As can be seen, a large number of overlapping portions are uniformly spaced in the tyre circumferential direction by the arrangement of the plural ply strips and as a result, a localised difference in the rigidity of the carcass is avoided to improve the dynamic balance and thereby ride comfort and steering stability are enhanced. Moreover, by losing a localised partial difference of level on the tread surface, the exterior of the tyre is improved.

Also when a carcass having a two or three layer structure is required it can be formed by rolling up one carcass ply composed of ply strips and thus the working time to form such a carcass can be shortened.

An embodiment of the present invention will now be described in detail with reference to the accompanying drawings, in which:
Fig.1 is a sectional view taken on the equatorial plane of a tyre showing an embodiment of the invention;
Fig.2 is a half sectional view in the tyre axial direction
Fig.3 is a perspective view of part of a carcass ply.
Fig.4 is a sectional view showing other embodiment
Fig.5 is a plan view showing other embodiment of carcass ply; and
Fig.6 is a perspective view showing a prior art carcass.

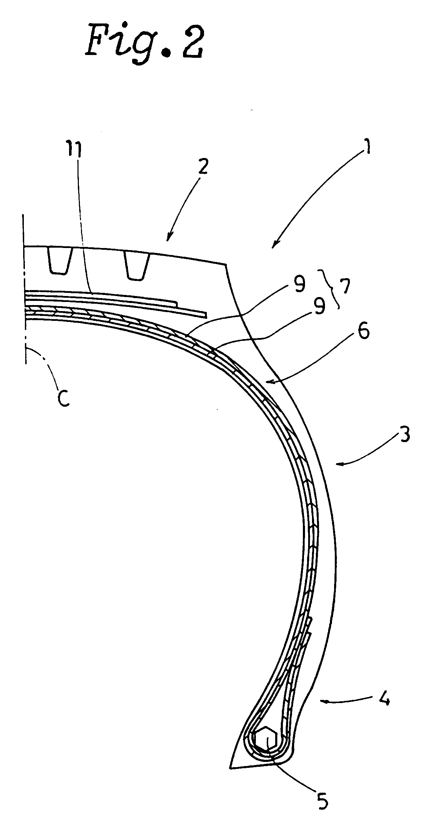

As shown in Fig. 2, a pneumatic tyre 1 comprises a tread 2, a pair of sidewalls 3 extending inwardly in the tyre radial direction one from each edge of the tread 2 and a pair of beads 4 each reinforced by an annular bead core 5 and positioned at the inward ends of the sidewalls 3.

Further, the tyre 1 is provided with a carcass 6 extending around the tyre through the tread 2, sidewalls 3 and turned up around the bead cores 5 at each edge. A belt 11 is disposed outside the carcass 6 and inside the tread 2. The carcass 6 is composed of a carcass ply 7 made of a plurality of ply strips 9.

Each ply strip 9 is a sheet of rectangular shape such that the completed carcass ply is divided into many pieces in the tyre circumferential direction. As each piece is topped by rubber compounds the ply strip 9 arrangement resulting has carcass cords arranged at an angle of 30 to 90 degrees with respect to the tyre equator and covered by topping rubber.

For the carcass cords, organic fibre cords, e.g. nylon, polyester, rayon, aromatic polyamide fibre cords or the like can be used.

The carcass ply 7 is formed by arranging the ply strips 9 continuously in the tyre circumferential direction with overlapping portions. Thus one end E1 in tyre circumferential direction of a ply strip 9a overlaps the an outer surface of the ply strip 9b adjacent to the ply strip 9a on said end E1 side, and the other end E2 in the tyre circumferential direction of the ply strip 9a overlaps onto an inner surface of a ply strip 9c adjacent to the ply strip 9a on said other end E2 side. By repeating this arranging process, adjacent ply strips 9 are overlapped and connected to each other sequentially, and the carcass ply 7 is formed in a cylindrical shape.

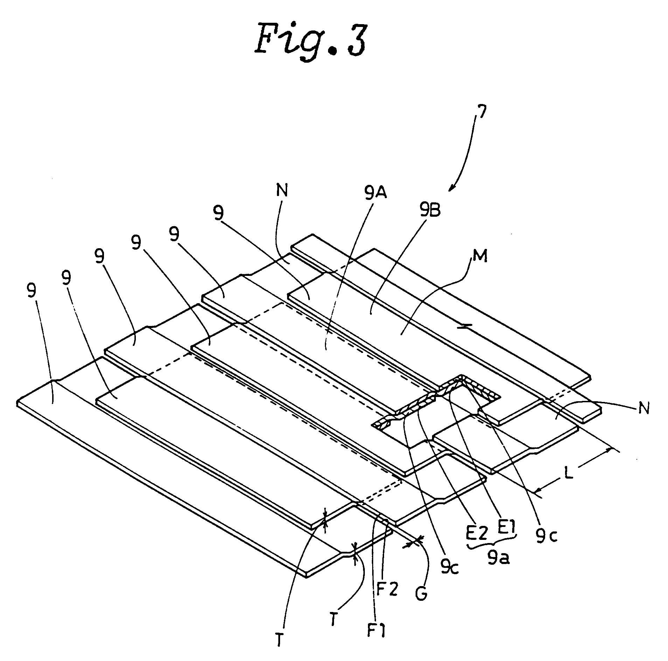

As shown in Fig.3, the ply strips 9 are connected sequentially in a plane, thereby the carcass ply 7 is previously formed in a band shape, further, by overlapping one edge of the pre-carcass ply 7 to the other edge, the carcass 6 rolled up in the tyre circumferential direction is formed.

Further, the gap G in the circumferential direction between the edge F1 of one ply strip 9b overlapping the end E1 of the strip 9a and the edge F2 of the adjacent ply strip 9c overlapping the other end E2 of the strip 9a is preferably set to be three times the thickness T of the ply strip 9 or less.

By specifying the gap G to be in above range, two ply strips 9 overlap each other for approximately the whole area of the carcass ply 7, as the result, in this embodiment, a carcass 6 which has a two-layer structure is formed by one carcass ply 7.

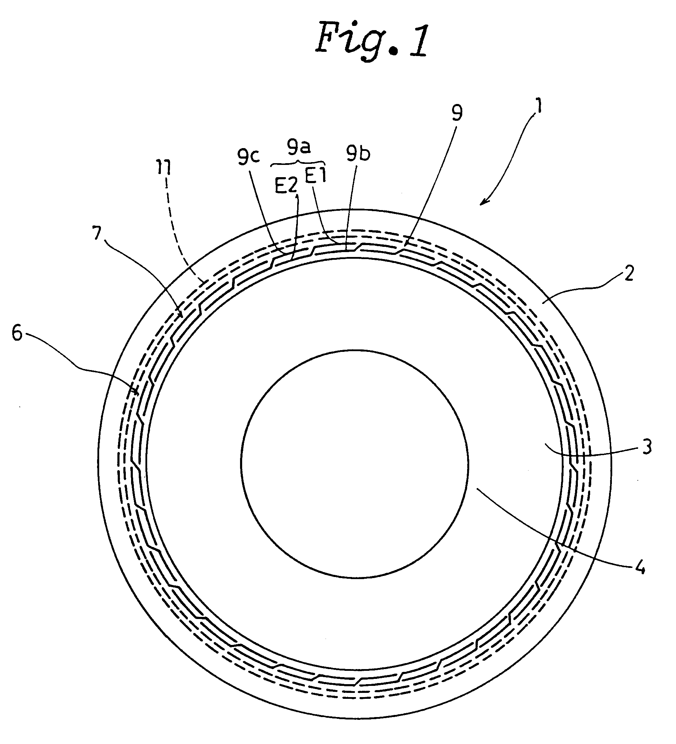

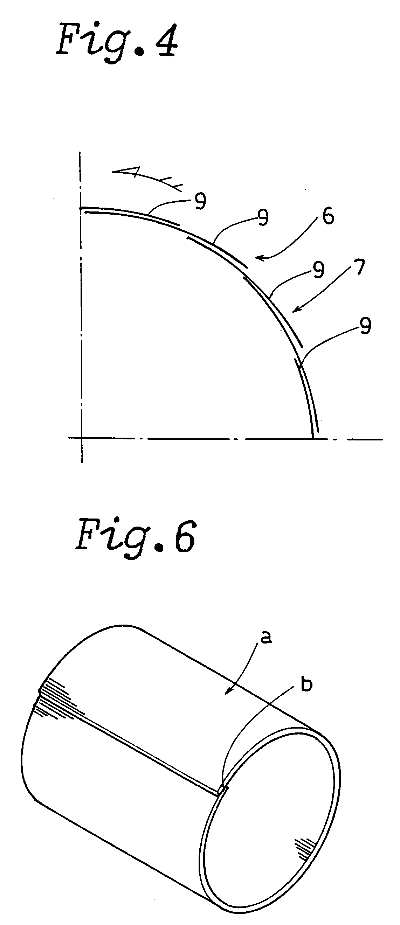

Each ply strip 9, also, has a bent or step shaped portion between one end E1 and the other end E2, as shown in Figs.1 and 3, and the outer surface over the successive ply strips 9a and 9b thus are smoothly continuous by this stepped construction. Alternatively, the ply strips 9 may be overlapped like scales without bending each ply strip, as shown in FIg.4.

Further, the length L of each ply strip 9 in the tyre circumferential direction is set in the range of 10mm to 600mm, more preferably from 10mm to 400mm. If the length L exceeds 600mm, the difference in rigidity at the overlapping portions from other portions is large, and thus dynamic unbalance of the tyre occurs, and running stability and ride comfort improvements are not achieved. Moreover, the rigidity at the overlapping portions becomes increased because the width of the overlapping portions becomes large, as a result, the carcass 6 shows a tendency to become a polygonal shape when rolling up the carcass ply. As a result the exterior of the tyre is spoilt. If the length L is not more than 400mm, the above mentioned problems are completely solved.

On the other hand, if the length L is not more than 10mm, the joint strength between the ply strips 9a and 9b is reduced and the cost of making the carcass is increased due to handling problems.

It is, also, preferable that the carcass 6 is formed by 10 to 50 strips per tyre for the same reasons as the restraint in the length L.

In this embodiment, the ply strips are classified into a group of ply strips 9A having a long width in the tyre axial direction and a group of ply strips 9B having a short width in the tyre axial direction. The ply strips 9A and the ply strips 9B are arranged alternately in the tyre circumferential direction.

When the gap G is set narrower, such that the carcass 6 has a conventional carcass two-layer structure, that is, the carcass wherein the thickness at the centre portion M of the carcass 6 is two times the thickness at the both end portions N is formed at one effort.

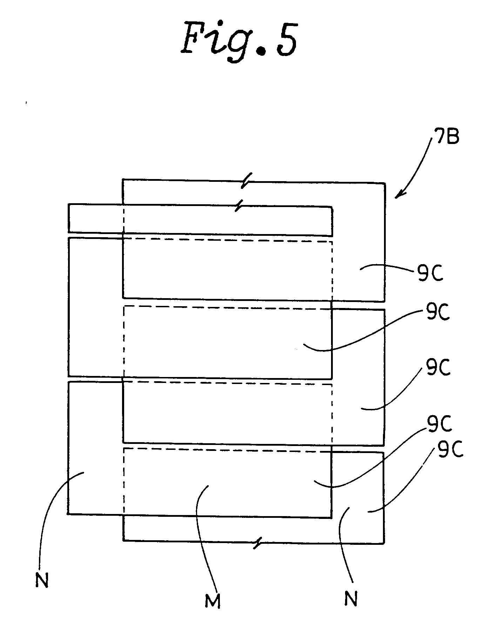

Fig.5 shows another embodiment in which the resultant ply thicknesses at the centre portion M and edge portions N are different from each other. In this embodiment, the ply strips 9C each have the same width in the tyre axial direction to each other, but one ply strip and the adjacent ply strip are mutually shifted in the axial direction of the tyre.

Further, the carcass may be formed by overlapping the ply strips into more than a two layer construction.

The belt 11 is composed of, in this embodiment, two plies of parallel cords which cross the carcass cords. For the belt cords, steel cords or organic fibre cords, e.g. nylon, polyester, aromatic polyamide fibre cords or the like can be used.

## Claims

1. A pneumatic tyre having a carcass (6) composed of at least one carcass ply extending from a tread (2) through sidewalls (3) and turned up around a bead core (5) in each of two beads (4), the carcass ply (7) comprising a plurality of ply strips (9), which are continuously arranged in the tyre circumferential direction with overlapping portions and one end (E1) in the tyre circumferential direction of one ply strip (9a) overlaps the outer surface of the adjacent ply strips (9b) adjacently arranged on said one end side, and the other end (E2) in the tyre circumferential direction of said one ply strip (9a) overlaps the inner surface of an adjacent ply strip (9c) adjacently arranged on said other end side characterised in that the carcass ply (7) comprises 10 to 50 ply strips (9) composed of a plurality of ply strips having a long width in the tyre axial direction and a plurality of ply strips having a short width in the tyre axial direction, and each having a length in the tyre circumferential direction of 10mm to 600mm, and a gap (G) in the circumferential direction between the adjacent edges (F1,F2) of said two ply strips (9b,9c) overlapping said one ply strip (9a) is set to be three time the thickness (t) of the ply strip or less and the ply strips having a long width and the ply strips having a short width are arranged alternatively in the tyre circumferential direction.

2. A pneumatic tyre having a carcass (6) composed of at least one carcass ply extending from a tread (2) through sidewalls (3) and turned up around a bead core (5) in each of two beads (4), the carcass ply (7) comprising a plurality of ply strips (9) which are continuously arranged in the tyre circumferential direction with overlapping portions and one end (E1) in the tyre circumferential direction of one ply strip (9a) overlaps the outer surface of the adjacent ply strip (9b) adjacently arranged on said one end side, and the other end (E2) in the tyre circumferential direction of said one ply strip overlaps the inner surface of an adjacent ply strip (9c) adjacently arranged on said other end side characterised in that the carcass ply (7) comprises 10 to 50 ply strips (9) having the same width in the tyre axial direction to each other, and each having a length in the tyre circumferential direction of 10mm to 600mm, and a gap (G) in the circumferential direction between the adjacent edges (F1,F2) of said two ply strips (9b,9c) which overlap said one ply strip (9a) is set to be three times the thickness (t) of the ply strip or less and one ply strip and the adjacent ply strip are mutually displaced in the tyre axial direction.

## Patentansprüche

1. Ein Luftreifen mit einer Karkasse (6), die aus zumindest einer Karkasseneinlage besteht, welche sich von einer Lauffläche (2) durch Seitenwände (3) erstreckt und um einen Wulstkern (5) in jedem von zwei Wulsten (4) nach oben gebogen ist, wobei die Karkasseneinlage (7) eine Mehrzahl von Einlagenstreifen (9) besitzt, die kontinuierlich in der Reifenumfangsrichtung mit sich überlappenden Bereichen angeordnet sind, und wobei in der Reifenumfangsrichtung ein Ende (E1) eines Einlagenstreifens (9a) die Außenfläche des danebenliegenden Einlagenstreifens (9b), der auf der Seite des einen Endes danebenliegend angeordnet ist, überlappt, und wobei das in der Reifenumfangsrichtung andere Ende (E2) des einen Einlagenstreifens (9a) die Innenfläche eines danebenliegenden Einlagenstreifens (9c), der auf der Seite des anderen Endes danebenliegend angeordnet ist, überlappt,
dadurch **gekennzeichnet,**
daß die Karkasseneinlage (7) 10 bis 50 Einlagenstreifen (9) aufweist, die aus einer Mehrzahl von Einlagenstreifen mit einer langen Breite in der Reifenaxialrichtung und einer Mehrzahl von Einlagenstreifen mit einer kurzen Breite in der Reifenaxialrichtung bestehen und jeweils eine Länge in der Reifenumfangsrichtung von 10 mm bis 600 mm besitzen, und daß ein Spalt (G) in der Umfangsrichtung zwischen den nebeneinanderliegenden Kanten (F1, F2) der beiden Einlagenstreifen (9b, 9c), die den einen Einlagenstreifen (9a) überlappen, so festgelegt ist, daß er das dreifache der Dicke (t) des Einlagenstreifens oder weniger beträgt, und daß die Einlagenstreifen mit einer langen Breite und die Einlagenstreifen mit einer kurzen Breite im Wechsel in der Reifenumfangsrichtung angeordnet sind.

2. Ein Luftreifen mit einer Karkasse (6), die aus zumindest einer Karkasseneinlage besteht, welche sich von einer Lauffläche (2) durch Seitenwände (3) erstreckt und um einen Wulstkern (5) in jedem von zwei Wulsten (4) nach oben gebogen ist, wobei die Karkasseneinlage (7) eine Mehrzahl von Einlagenstreifen (9) besitzt, die kontinuierlich in der Reifenumfangsrichtung mit sich überlappenden Bereichen angeordnet sind, und wobei in der Reifenumfangsrichtung ein Ende (E1) eines Einlagenstreifens (9a) die Außenfläche des danebenliegenden Einlagenstreifens (9b), der auf der Seite des einen Endes danebenliegend angeordnet ist, überlappt, und wobei das in der Reifenumfangsrichtung andere Ende (E2) in der Reifenumfangsrichtung des einen Einlagenstreifens (9a) die Innenfläche eines danebenliegenden Einlagenstreifens (9c), der auf der Seite des anderen Endes danebenliegend angeordnet ist, überlappt,
dadurch **gekennzeichnet,**
daß die Karkasseneinlage (7) 10 bis 50 Einlagenstreifen (9) aufweist, die in der Reifenaxialrichtung die selbe Breite zueinander haben und jeweils eine Länge in der Reifenumfangsrichtung von 10 mm bis 600 mm besitzen, und daß ein Spalt (G) in der Umfangsrichtung zwischen den nebeneinanderliegenden Kanten (F1, F2) der beiden Einlagenstreifen (9b, 9c), die den einen Einlagenstreifen (9a) überlappen, so festgelegt ist, daß er das dreifache der Dicke (t) des Einlagenstreifens oder weniger beträgt, und daß ein Einlagenstreifen und der danebenliegende Einlagenstreifen gegeneinander in der Reifenaxialrichtung versetzt sind.

## Revendications

1. Pneumatique comportant une carcasse (6) composée d'au moins une nappe de carcasse passant dans une bande de roulement (2) et dans des flancs (3) et repliée autour d'une tringle (5) dans chacun de deux talons (4), la nappe de carcasse comprenant plusieurs bandes (9) de nappe qui sont disposées de façon continue dans la direction circonférentielle du pneumatique avec des parties de recouvrement et une première extrémité (E1) d'une bande (9a) de nappe, dans la direction circonférentielle du pneumatique, recouvre la surface externe des bandes adjacentes (9b) de nappe disposées du côté de la première extrémité sous forme adjacente, et l'autre extrémité (E2) de cette bande (9a) de nappe, dans la direction circonférentielle du pneumatique, recouvre la surface interne de la bande adjacente (9c) de nappe disposée près du côté de l'autre extrémité, caractérisé en ce que la nappe (7) de carcasse comprend dix à cinquante bandes (9) de nappe composées de plusieurs bandes de nappe ayant une grande largeur dans la direction axiale du pneumatique et de plusieurs bandes de nappe ayant une faible largeur dans la direction axiale du pneumatique et ayant une longueur comprise entre 10 mm et 600 mm dans la direction circonférentielle du pneumatique, et un espace (G) formé dans la direction circonférentielle entre les bords adjacents (F1, F2) des deux bandes (9b, 9c) de nappe recouvrant la première bande (9a) de nappe est réglé afin qu'il soit égal à trois fois l'épaisseur (t) de la bande de nappe ou moins, et les bandes de nappe ayant une grande largeur et les bandes de nappe ayant une petite largeur sont disposées en alternance dans la direction circonférentielle du pneumatique.

2. Pneumatique comportant une carcasse (6) composée d'au moins une nappe de carcasse passant dans une bande de roulement (2) et dans des flancs (3) et repliée autour d'une tringle (5) dans chacun de deux talons (4), la nappe de carcasse comprenant plusieurs bandes (9) de nappe qui sont disposées de façon continue dans la direction circonférentielle du pneumatique avec des parties de recouvrement et une première extrémité (E1) d'une bande (9a) de nappe, dans la direction circonférentielle du pneumatique, recouvre la surface externe des bandes adjacentes (9b) de nappe disposées du côté de la première extrémité sous forme adjacente, et l'autre extrémité (E2) de cette bande de nappe, dans la direction circonférentielle du pneumatique, recouvre la surface interne de la bande adjacente (9c) de nappe disposée près du côté de l'autre extrémité, caractérisé en ce que la nappe (7) de carcasse comporte dix à cinquante bandes (9) de nappe ayant la même largeur dans la direction axiale et ayant chacune une longueur comprise entre 10 mm et 600 mm dans la direction circonférentielle, et un espace (G) dans la direction circonférentielle, entre les bords adjacents (F1, F2) des deux bandes (9b, 9c) de nappe qui recouvrent la première bande (9a) de nappe, est réglé à trois fois l'épaisseur (T) de la bande de nappe ou moins, et une bande de nappe et la bande de nappe adjacente sont décalées mutuellement dans la direction axiale du pneumatique.
